# EUROPEAN PATENT SPECIFICATION

(11) **EP 2 447 160 B1**
(45) Date of publication and mention of the grant of the patent: **31.07.2013**
(21) Application number: 10382282.1
(22) Date of filing: 27.10.2010
(51) Int. Cl.: B64D 39/04

(54) **Adaptable boom for in-flight refuelling system**
Anpassbarem Ausleger für ein Betankungssystem
Perche adaptable pour système de ravitaillement en vol

(43) Date of publication of application: 02.05.2012
(73) Proprietor: EADS Construcciones Aeronauticas, S.A., 28022 Madrid (ES)
(72) Inventor: Martínez Vázquez, Bruno, 28906 Getafe, Madrid (ES); Flores Giraldo, Santiago, 28906 Getafe, Madrid (ES)
(74) Representative: Elzaburu Marquez, Alberto

(56) References cited:
- WO-A1-2005/016749
- GB-A- 676 430
- US-A1- 2010 025 536

## Description

### FIELD OF THE INVENTION

The present invention relates generally to aircraft refuelling booms and more specifically to an aircraft boom refuelling system adapting its configuration as a function of the receiver aircraft characteristics and circumstances of the in flight refuelling operation.

### BACKGROUND

For in flight refuelling operations, one usual method is based on the use of a boom refuelling system for interconnecting a tanker aircraft with a receiver aircraft in flight. Such a boom refuelling system is known from WO 2005/016749, which shows all the features of the preamble of claim 1. The boom refuelling system usually comprises a rigid boom or boom mast and a telescopic tube, which can be extended or retracted on the boom mast, for effecting refuelling operations, the end of the telescopic tube comprising a nozzle, which is introduced in the receptacle of the receiver aircraft. The boom is usually attached to the underside of the tanker aircraft by means of a first articulation element, located at the root of the boom, contacting the underside of the tanker aircraft. Also, the boom comprises a second articulation element, located at the end of the boom , or nozzle, which connects the boom with the receiver aircraft. Customary the nozzle has latches, and the receptacle of the receiver aircraft has latch-pins, intended to fix and lock the nozzle of the boom telescopic tube by means of the latches provided thereon. Once the nozzle is connected to the receptacle, the boom operator is able to start performing transfer of fuel from the tanker aircraft to the receiver aircraft in a safe manner. The first and second articulation elements are provided in the boom device structure in order to allow absorbing the relative movements between the tanker and the receiver aircraft during refuelling operations. These two articulation elements comprise, each one, at least two rotational degrees of freedom.

The first articulation element allows, having at least two rotational degrees of freedom, the free movement of the whole boom device by controlling a pair of aerodynamic lift surfaces, known as ruddevators. This first articulation element is usually located at the root of the boom, allowing the best possible boom operational envelope, a suitable lever arm for control by means of the aerodynamic lift surfaces, also allowing the boom system to be stowed adjacent to the aircraft fuselage when not in use.

The second articulation element, located at the nozzle of the boom allows, once the tanker aircraft and the receiver aircraft are connected for refuelling, the adaptation of movements of both aircraft, also relieving strains. This articulation is usually a ball joint, and the spring type shock absorber that cooperates for said objective is defined by the military standard MS27604 to be at 11 inches (27,9 cm) from the end edge of the nozzle.

In some receiver aircraft, the receptacle into which the nozzle of the boom is connected may be located at the rear part of a protuberance, such as an antenna or a cockpit canopy, this protuberance being at a short distance of the receptacle in the receiver aircraft. In these cases, once the receiver aircraft and the tanker aircraft are connected by means of the boom, and the receiver aircraft moves upwards relative to the tanker, therefore reducing the boom elevation angle (which is the angle formed by the boom with respect to the tanker waterline), there exists an evident danger of geometric interference, in particular the boom device structure impacting the protuberance. This problem is taken into consideration when effecting the definition of the boom operational envelope, being the possibility of interference one of the criteria for the definition of the boom operational envelope. It has been tested that these problems may appear, for some aircraft, whenever the boom elevation angle is below around 26°. An additional problem may appear in some circumstances due to the orientation of the receiving aircraft relative to the boom and/or the tanker, especially for different roll angles of the vehicles in flight, rendering difficult the connection and fixing of the boom to the receptacle in the receiver aircraft by means of the latches, when not in line with the latch-pins.

It shall then be desirable to provide a boom refuelling system configuration that allows a more reliable connection of the boom to the receiver aircraft in a higher range of relative positions and orientations of the tanker and receiver aircraft, with a higher boom operational envelope, and avoiding any risk of impact of the boom with any protuberance existing in different receiver aircraft. The present invention is oriented to solving this problem.

### SUMMARY OF THE INVENTION

One object of the present invention, as defined by the features of claim 1, is to provide a boom refuelling system operating between a tanker aircraft and a receiver aircraft, comprising a rigid mast and a telescopic tube, the system also comprising a first articulation element at its root and a second articulation element at its tip, wherein the boom system further comprises a third articulation element with at least one rotational degree of freedom, located between the first articulation element and the second articulation element. The third articulation element is actuated by means of an actuator that allows the rotation of a part of the boom around the telescopic tube longitudinal axis with respect to the other part of the boom.

This configuration facilitates the accurate connection of the boom system in the receptacle of the receiver aircraft, in cases where the receiver aircraft tilts with respect to the tanker aircraft, or in cases where the tanker aircraft tilts with respect to the receiver aircraft.

The aircraft boom refuelling system comprises a third articulation element, this third articulation element being comprised in the telescopic tube or in the rigid boom or boom mast, allowing that the boom adapts its configuration to provide a safe and reliable connection for a higher range of relative positions and orientations of the tanker and receiver aircraft, and adapted as a function of the receiver aircraft characteristics, especially in cases where the receptacle in the receiver aircraft is located at the rear part of a protuberance, avoiding any risk of impact of the boom refuelling system with any of these existing protuberances.

The third articulation element in the boom refuelling system of the invention comprises at least one rotational degree of freedom, and is preferably commanded (actuated) by the boom operator (boomer).

The boom refuelling system of the invention can operate at a higher elevation angle than the usual limited angle calculated, therefore being provided a higher boom operational envelope.

Other features and advantages of the present invention will be understood from the following detailed description in relation with the enclosed drawings.

### BRIEF DESCRIPTION OF DRAWINGS

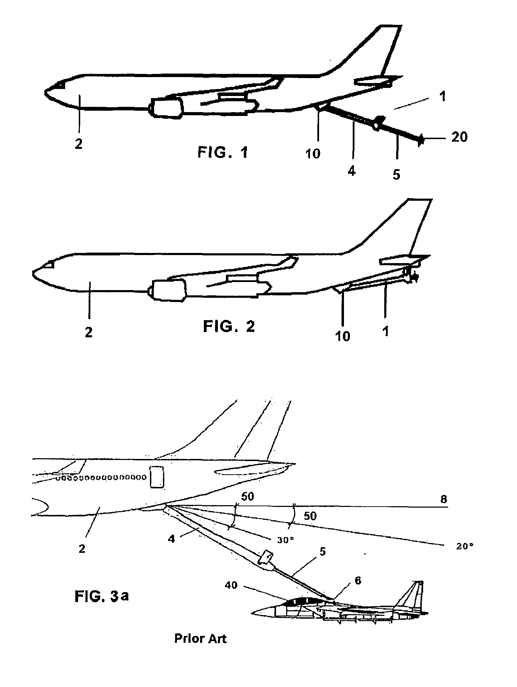

Figure 1 shows a schematic view of a boom refuelling system, in a deployed position.
Figure 2 shows a schematic view of a boom refuelling system, in a stowed position.
Figure 3a shows a boom refuelling system according to the prior art, contacting a receiver aircraft having a protuberance.
Figure 3b shows a schematic view of the boom refuelling system according to the prior art, in connexion with a receiver aircraft having a protuberance, in a relative position with low elevation angle, where the risk of interference is apparent.
Figure 4 shows a schematic view of the orientation of the receiver aircraft relative to the boom refuelling system and/or the tanker aircraft, especially for different roll angles of these vehicles in flight.
Figure 5 shows a schematic view of the boom refuelling system according to the present invention, contacting a receiver aircraft having a protuberance.
Figures 6a and 6b show views of preferred embodiments of the third articulation element in the boom refuelling system according to the present invention.
Figures 7a and 7b show views of further preferred embodiments of the third articulation element in the boom refuelling system according to the present invention.

### DETAILED DESCRIPTION OF PREFERRED EMBODIMENTS

A preferred embodiment of the invention will be described in connection with an aircraft boom refuelling system 1 for effecting refuelling operations between a tanker aircraft 2 and a receiver aircraft 3. The boom system 1 comprises a rigid boom or boom mast 4, a telescopic tube 5, extending longitudinally with respect to the boom mast 4, and a nozzle 6.

The boom refuelling system 1 of the invention comprises a first articulation element 10, allowing the boom 4 at least two rotational degrees of freedom with respect to the tanker aircraft 2. The boom 1 also comprises a second articulation element 20, located at the nozzle 6 in the telescopic tube 5, that allows said nozzle 6 at least two rotational degrees of freedom with respect to the telescopic tube 5.

The boom refuelling system 1 of the invention also comprises a third articulation element 30, this third articulation element 30 being preferably comprised in the telescopic tube 5, and alternatively may be comprised in the boom mast 4. The third articulation element 30 in the boom refuelling system 1 comprises at least one rotational degree of freedom.

The third articulation element 30 is commanded (actuated) in order to adapt the configuration of the boom system 1 to the receiver aircraft 3, preferably by the boom operator (boomer), By adding a third articulation element 30, preferably in the telescopic tube 5, the geometry of the boom refuelling system 1 can be modified for increasing the boom operational envelope, facilitating an easier connection with the receptacle 70 in the receiver aircraft 3, with lower collision risks. This is especially advantageous for particular positioning and orientation of the tanker aircraft 2 relative to the receiver aircraft 3 in flight, and/or for particular types of receiver aircraft 3. For example, in some receiver aircraft 3, the receptacle 70 into which the nozzle 6 of the boom system 1 is connected may be located at the rear part of a protuberance 40, such as an antenna or a cockpit canopy, this protuberance 40 being at a short distance of the receptacle 70 in the receiver aircraft 3. In these cases, once the receiver aircraft 3 and the tanker aircraft 2 are connected by means of the boom 1, and the receiver aircraft 3 moves upwards relative to the tanker 2, therefore reducing the boom elevation angle 50 (which is the angle formed by the boom 1 with respect to the tanker waterline 8), there exists an evident danger of geometric interference, in particular the boom system 1 structure impacting the protuberance 40. This is taken into consideration when effecting the definition of the boom operational envelope, being the possibility of interference one of the criteria for the definition of the boom operational envelope. It has been tested that these problems may appear, for some aircraft, whenever the boom elevation angle 50 is below around 26°. For safety reasons, in practical terms, the boom elevation angle 50 is kept over 20°.

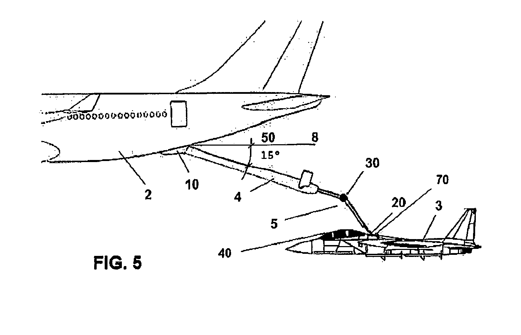

However, when using a boom refuelling system 1 as the one proposed by the invention, it is possible to operate (see Figure 5) with a boom elevation angle 50 which is below 20°, being typically lowered down to 15°, which highly extends the boom operational envelope obtained.

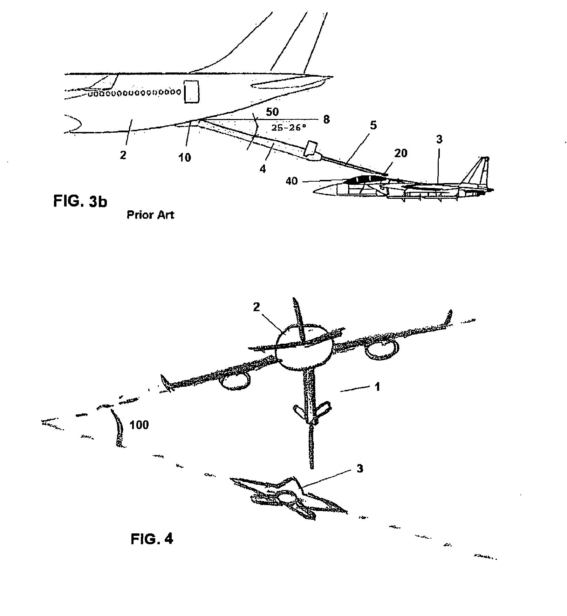

An easier connection of the refuelling boom system 1 in the receptacle 70 of the receiver aircraft 3 is also possible with the use of the third actuable articulation 30, for example when the attitudes in flight of the vehicles 2, 3 present different roll angles 100 (see Figure 4), rendering difficult the connection and fixing of the boom system 1 to the receptacle 70 in the receiver aircraft 3 by means of the latches of the boom system 1, when not in line with the latch-pins in the receptacle 70 in the receiver aircraft 3.

As it can be seen in Figure 5, the third articulation element 30 provided by the boom refuelling system 1 of the invention is located preferably in the telescopic tube 5, at a higher distance from the end of the nozzle 6 than the distance between the nozzle 6 and the second articulation element 20, that is, the third articulation element 30 is provided in the boom refuelling system 1 between the first articulation element 10 and the second articulation element 20, preferably at the telescopic tube 5, and more in particular at the boom tip assembly at a distance between 90 cm and 280 cm of the end of the nozzle 6. However, the third articulation element 30 may also be located at the boom mast 4.

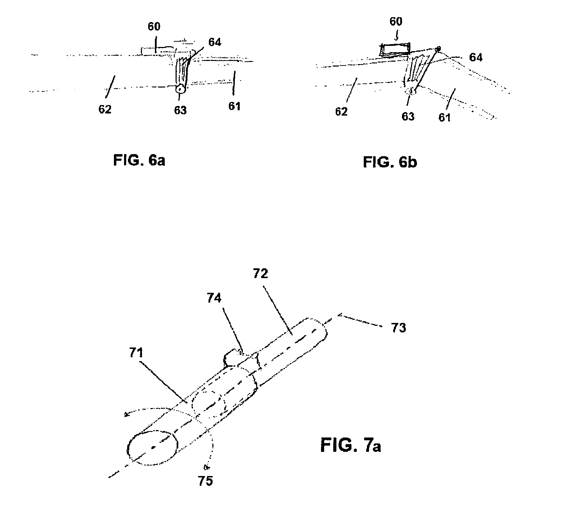

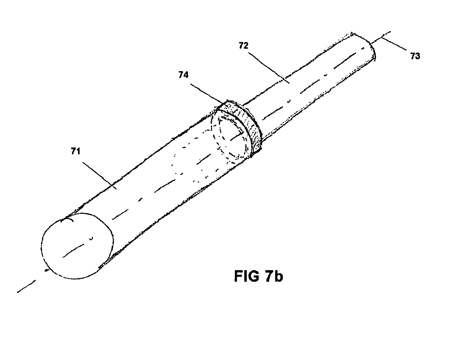

The third articulation element 30 can be actuated by the boomer in the tanker aircraft 2, by means of one or more actuators 60, 74, such as for example linear actuators or torque motors (see Figures 6a, 6b and 7a, 7b respectively), preferably from the boom control station at the tanker aircraft 2. Said actuator or actuators 60, 74 allow that one of the parts 61, 71 of the telescopic tube 5 (in cases where the third articulation element 30 is comprised within the telescopic tube 5) rotates with respect to the other part 62, 72. Optionally to the possibility of actuation by the boomer, and additionally or alternatively to it, the third articulation element 30 can also be actuated and controlled by an automatic control system, having as inputs parameters determining or indicating one or more conditions among for example: the elevation angle of the boom; the relative position or relative coordinates of the tanker and receiver aircraft; the attitude in flight and orientation of the tanker and receiver aircraft; the type and/or geometry of the receiver aircraft. These input parameters can be provided by appropriate sensor means, camera means or communication means, known by the skilled person according to the nature of the condition and parameters.

According to the invention, as it is shown in Figures 7a and 7b, the third articulation element 30 comprises one actuator 74 allowing that a section 72 of the telescopic tube 5 can rotate 75 with respect to a different section 71 of the boom, along the telescopic tube longitudinal axis 73. This rotation can be controlled and actuated, preferably by the operator or boomer in the tanker aircraft 2, and by means of an actuator 74. This configuration facilitates the accurate connection of the boom system 1 in the receptacle 70 of the receiver aircraft 3, in cases where the receiver aircraft 3 tilts with respect to the tanker aircraft 2, or in cases where the tanker aircraft 2 tilts with respect to the receiver aircraft 3 (shown in Figure 4).

According to another aspect of the invention, the third articulation element 30 comprises one actuator 60, allowing the rotation of the part 61 around a rotation axis 63 normal to the longitudinal axis of the boom 1 (see Figure 6b). An elastic element 64, typically with the shape of a bellows unit, is provided in order to maintain the tightness and sealing of the system 1.

Although the present invention has been fully described in connection with preferred aspects, it is evident that modifications may be introduced within the scope thereof, not considering this as limited by these aspects, but by the contents of the following claims.

## Claims

1. Boom refuelling system (1) operating between a tanker aircraft (2) and a receiver aircraft (3), comprising a rigid mast (4) and a telescopic tube (5), the system (1) also comprising a first articulation element (10) at its root and a second articulation element (20) at its tip, wherein the boom system (1) further comprises a third articulation element (30) with at least one rotational degree of freedom, located between the first articulation element (10) and the second articulation element (20) for allowing the rotation of a part (61, 72) of the boom with respect to the other part (62,71), said articulation element being actuated by at least one actuation means, **characterized in that** the third articulation element (30) is actuated by means of an actuator (74) that allows the rotation of a part (72) of the boom (4, 5) around the telescopic tube longitudinal axis (73) with respect to the other part (71) of the boom.

2. System (1) according to the previous claim, wherein the third articulation element (30) is provided in the telescopic tube (5),

3. System (1) according to any of the previous claims, wherein the third articulation element (30) allows the rotation of a part (61) of the boom (4,5) around a rotation axis (63) normal to the longitudinal axis of the boom , with respect to the other part (62) of the boom.

4. System (1) according to any of the previous claims, wherein an elastic element (64) is provided between one part (61, 72) and the other part (62, 71) for maintaining the tightness of the system.

5. System (1) according to any of the previous claims, wherein the third articulation element (30) is commanded by the boom operator from a boom control station at the tanker aircraft.

6. System (1) according to any of the previous claims, wherein the third articulation element (30) is commanded by an automatic control system.

7. System (1) according to any of claims 2-6, wherein the third articulation element (30) is located at the boom tip assembly, at a distance between 90 cm and 280 cm of the end of the nozzle (6).

8. A tanker aircraft having a boom refuelling system (1) according to any of the previous claims.

## Patentansprüche

1. Auslegerbetankungssystem (1), das zwischen einem Tankluftfahrzeug (2) und einem Empfängerluftfahrzeug (3) betrieben wird, mit einem starren Mast (4) und einem Teleskoprohr (5), wobei das System (1) auch ein erstes Gelenkelement (10) an seinem Fuß und ein zweites Gelenkelement (20) an seiner Spitze aufweist, wobei das Auslegersystem (1) ferner ein drittes Gelenkelement (30) mit mindestens einem Rotationsfreiheitsgrad aufweist, das zwischen dem ersten Gelenkelement (10) und dem zweiten Gelenkelement (20) zum Ermöglichen der Drehung von einem Teil (61, 72) des Auslegers in Bezug auf den anderen Teil (62, 71) angeordnet ist, wobei dieses Gelenkelement durch mindestens ein Antriebsmittel angetrieben wird, **dadurch gekennzeichnet, dass** das dritte Gelenkelement (30) durch einen Antrieb (74) angetrieben wird, der die Drehung von einem Teil (72) des Auslegers (4, 5) um die Teleskoprohrlängsachse (73) in Bezug auf den anderen Teil (71) des Auslegers ermöglicht.

2. System (1) nach Anspruch 1, bei dem das dritte Gelenkelement (30) in dem Teleskoprohr (5) vorgesehen ist.

3. System (1) nach einem der vorhergehenden Ansprüche, bei dem das dritte Gelenkelement (30) die Drehung von einem Teil (61) des Auslegers (4, 5) um eine Drehachse (63), die normal zu der Längsachse des Auslegers angeordnet ist, in Bezug auf den anderen Teil (62) des Auslegers ermöglicht.

4. System (1) nach einem der vorhergehenden Ansprüche, bei dem ein elastisches Element (64) zwischen einem Teil (61, 72) und dem anderen Teil (62, 71) zum Erhalten der Dichtigkeit des Systems vorgesehen ist.

5. System (1) nach einem der vorhergehenden Ansprüche, bei dem das dritte Gelenkelement (30) durch den Auslegerführer von einer Auslegersteuerstation an dem Tankluftfahrzeug kontrolliert wird.

6. System (1) nach einem der vorhergehenden Ansprüche, bei dem das dritte Gelenkelement (30) durch ein automatisches Regelsystem kontrolliert wird.

7. System (1) nach einem der Ansprüche 2 bis 6, bei dem das dritte Gelenkelement (30) an der Auslegerspitzenbaugruppe mit einem Abstand zwischen 90 cm und 280 cm von dem Ende des Rohrstutzens (6) angeordnet ist.

8. Tankluftfahrzeug mit einem Auslegerbetankungssystem (1) nach einem der vorhergehenden Ansprüche.

## Revendications

1. Système de ravitaillement en carburant à perche (1) fonctionnant entre un avion-citerne (2) et un avion récepteur (3), comprenant un mât rigide (4) et un tube télescopique (5), le système (1) comprenant également un premier élément d'articulation (10) à sa base et un deuxième élément d'articulation (20) à son extrémité, dans lequel le système à perche (1) comprend en outre un troisième élément d'articulation (30) avec au moins un degré de liberté de rotation, situé entre le premier élément d'articulation (10) et le deuxième élément d'articulation (20) pour permettre la rotation d'une partie (61, 72) de la perche par rapport à l'autre partie (62, 71), ledit élément d'articulation étant actionné par au moins un moyen d'actionnement, **caractérisé en ce que** le troisième élément d'articulation (30) est actionné au moyen d'un actionneur (74) qui permet la rotation d'une partie (72) de la perche (4, 5) autour de l'axe longitudinal du tube télescopique (73) par rapport à l'autre partie (71) de la perche.

2. Système (1) selon la revendication précédente, dans lequel le troisième élément d'articulation (30) est prévu dans le tube télescopique (5).

3. Système (1) selon l'une quelconque des revendications précédentes, dans lequel le troisième élément d'articulation (30) permet la rotation d'une partie (61) de la perche (4, 5) autour d'un axe de rotation (63) normal à l'axe longitudinal de la perche, par rapport à l'autre partie (62) de la perche.

4. Système (1) selon l'une quelconque des revendications précédentes, dans lequel un élément élastique (64) est prévu entre une partie (61, 72) et l'autre partie (62, 71) pour maintenir l'étanchéité du système.

5. Système (1) selon l'une quelconque des revendications précédentes, dans lequel le troisième élément d'articulation (30) est commandé par l'opérateur de la perche à partir d'un poste de commande de perche dans l'avion-citerne.

6. Système (1) selon l'une quelconque des revendications précédentes, dans lequel le troisième élément d'articulation (30) est commandé par un système de commande automatique.

7. Système (1) selon l'une quelconque des revendications 2 à 6, dans lequel le troisième élément d'articulation (30) est situé au niveau de l'ensemble d'extrémité de perche, à une distance entre 90 cm et 280 cm de l'extrémité de la buse (6).

8. Avion-citerne comportant un système de ravitaillement en carburant à perche (1) selon l'une quelconque des revendications précédentes.
